# EUROPEAN PATENT SPECIFICATION

(11) **EP 4 390 167 B1**
(45) Date of publication and mention of the grant of the patent: **10.09.2025**
(21) Application number: 23216754.4
(22) Date of filing: 14.12.2023
(51) Int. Cl.: F16C 33/72, F16C 33/78

(54) **ROLLING BEARING WITH SEALS AND PURGING CHANNEL**
WÄLZLAGER MIT DICHTUNGEN UND SPÜLKANAL
PALIER À ROULEMENT AVEC JOINTS D'ÉTANCHÉITÉ ET CANAL DE PURGE

(30) Priority: 20.12.2022 DE 102022214026
(43) Date of publication of application: 26.06.2024
(73) Proprietor: Aktiebolaget SKF, 415 50 Göteborg (SE)
(72) Inventor: Huot-Marchand, Marie-Joelle, 89240 Diges (FR); Bredoire, Vincent, 89240 Pourrain (FR)
(74) Representative: Kuhstrebe, Jochen

(56) References cited:
- WO-A2-2010/040027
- DE-A1- 102009 021 322
- DE-A1- 3 742 079
- GB-A- 2 573 194
- US-A1- 2014 346 738

## Description

The present invention relates to the field of rolling bearings.

The invention particularly relates to the field of large-diameter rolling bearings having an inner ring and an outer ring arranged concentrically about an axis of rotation running in an axial direction.

Such large-diameter rolling bearings may be used for example in marine applications, for example in a tidal or marine turbine power station, or in a tunnel boring machine, or in a mining extraction machine or in a wind turbine.

A large-diameter rolling bearing generally comprises two concentric inner and outer rings, and at least one row of rolling elements, such as rollers or balls, arranged between the rings. The bearing also comprises seals disposed between the inner and outer rings to define a closed space inside which the rolling elements are arranged.

Large-diameter rolling bearings are generally used in aggressive environments, in particular in marine applications. Seals prevent exterior elements, such as dust, abrasive particles, water and marine species, for example plankton and algae, from getting inside said bearing and damaging its components. Those exterior elements may also alter the seal itself, leading to a reduction in the seal service life.

Generally, a plurality of additional adjacent seals is provided on the bearing front side which is directly in contact with the aggressive environments, for example with the saltwater. These additional seals are fixed to a sealing ring of one of the inner and outer rings and comprise a sealing lip in sliding contact with a running surface of a sealing ring of the other ring. Hence, several adjacent closed outer chambers are delimited between the sealing lips of the adjacent seals.

If water starts to enter inside the rolling bearing, by first entering inside the first outer seal chamber, it is desired to prevent the water or pollution to move further inside the bearing until the rolling space.

This water ingress problem can occur in most of the applications, but in particular for immerged applications such as in a tidal turbine.

One aim of the present invention is to overcome this drawback.

GB 2 573 194 A discloses the features of the preamble of claim 1.

The invention relates to a rolling bearing comprising a first ring and a second ring capable of rotating concentrically relative to one another, and at least one row of rolling elements arranged between first and second raceways of the said first and second rings.

The first ring comprises at least one first rolling ring provided with said first raceway and at least one first sealing ring secured to the first rolling ring. The second ring comprises at least one second rolling ring provided with said second raceway and at least one second sealing ring secured to the second rolling ring.

The rolling bearing further comprises at least first and second successive seals supported by said first sealing ring of the first ring and each provided with at least one sealing lip coming into contact with said second sealing ring of the second ring, the sealing lips of said first and second successive seals delimiting between said first and second sealing rings a first chamber.

According to a general feature, at least a first purging channel is provided through the second ring and comprises at least one inlet orifice opening into the first chamber and at least one outlet orifice opening on a surface of the second ring which is accessible from the outside of the rolling bearing.

Thanks to the invention, in case some fluid such water enters the first sealed chamber, it is evacuated through the first purging channel until the outlet orifice(s). This leads to optimize sealing performance of the first and second successive seals and to avoid to change these seals too often.

The fluid can circulate through the first purging channel thanks to the gravity force and/or under the effect of a pump connected to the outlet orifice(s).

In one embodiment, said first purging channel is provided through said second sealing ring and said second rolling ring of the second ring, the surface onto which opens said outlet orifice of said first purging channel is located on said second rolling ring.

Alternatively, said first purging channel may be provided only through said second sealing ring of the second ring. In this case, the surface onto which opens said outlet orifice of said first purging channel is located on said second sealing ring.

In one embodiment, the rolling bearing further comprises at least one closing element reversely attached at said outlet orifice of said first purging channel.

Preferably, the closing element is made of transparent material so that one can visually detect the presence of contaminant fluid during an inspection of the bearing. In such case, the closing element can be removed and placed back in position after the fluid has been purged.

The closing element may be a plug. Alternatively, the closing element may be a collector to collect fluid.

The rolling bearing may further comprise at least a third seal supported by said first sealing ring of the first ring and provided with at least one sealing lip coming into contact with said second sealing ring of the second ring, the sealing lips of said second and third seals delimiting between said first and second sealing rings a second chamber, and at least a second purging channel being provided through the second ring and comprising at least one inlet orifice opening into the second chamber and at least one outlet orifice opening on a surface of the second ring which is accessible from the outside of the rolling bearing. Said second purging channel is distinct from said first second purging channel.

In one embodiment, said second purging channel is provided through said second sealing ring and said second rolling ring, the surface onto which opens said outlet orifice of said first purging channel is located on said second rolling ring. Alternatively, said second purging channel may be provided only through said second sealing ring of the second ring.

In one embodiment, the rolling bearing further comprises at least one closing element reversely attached at said outlet orifice of said second purging channel. Preferably, this closing element is made of transparent material. This closing element may be a plug. Alternatively, the closing element may be a collector to collect fluid.

In one embodiment, the rolling bearing further comprises at least first and second successive sealing members axially interposed between said second rolling ring and said second sealing ring of the second ring, and at least one first leakage channel provided through said second rolling ring, or through said second sealing ring, and comprising at least one inlet orifice opening on a frontal surface of said second rolling ring, or of said second sealing ring, in a zone located radially between the first and second successive sealing members and at least one outlet orifice opening on a surface of said second rolling ring, or of said second sealing ring, which is accessible from the outside of the rolling bearing.

The rolling bearing may further comprise at least one closing element reversely attached at said outlet orifice of said first leakage channel. Preferably, this closing element is made of transparent material. This closing element may be a plug. Alternatively, the closing element may be a collector to collect fluid.

In one embodiment, the rolling bearing further comprises at least a first seal member axially interposed between said first rolling ring and said first sealing ring of the first ring and radially offset with respect to the first seal, and at least one second leakage channel provided through said first rolling ring, or through said first sealing ring, and comprising at least one inlet orifice opening on a frontal surface of said first rolling ring, or of said first sealing ring, in a zone located radially between the first seal member and the first seal, and at least one outlet orifice opening on a surface of said first rolling ring, or of said first sealing ring, which is accessible from the outside of the rolling bearing. The rolling bearing may further comprise at least one closing element reversely attached at said outlet orifice of said second leakage channel. Preferably, this closing element is made of transparent material. This closing element may be a plug. Alternatively, the closing element may be a collector to collect fluid.

In one embodiment, said first sealing ring of the first ring is formed as a split ring and comprises at least a first part ring and a second part ring axially stacked, the first and second successive seals being respectively supported by the first and second part rings, the first seal member being axially interposed between said first rolling ring and the first part ring of said first sealing ring of the first ring. Said second leakage channel may extend axially through the first and second part rings of said first sealing ring.

In one embodiment, the rolling bearing further comprises, axially on each side of said first and second rolling rings of the first and second rings, seals delimiting radially between said first and second rolling rings a closed rolling space inside which is housed said row of rolling elements, said seals being distinct from the first and second successive seals.

In one embodiment, the first ring is the inner ring and the second ring is the outer ring. Alternatively, the first ring is the outer ring and the second ring is the inner ring.

The present invention and its advantages will be better understood by studying the detailed description of specific embodiments given by way of non-limiting examples and illustrated by the appended drawings on which:
- Figure 1 is a cross-section of a rolling bearing according to a first example of the invention,
- Figures 2 to 4 are partial cross-sections of the rolling bearing of Figure 1 according to other cutting planes,
- Figures 5 to 7 are cross-sections of the rolling bearing of Figure 1 according to other cutting planes,
- Figure 8 is a cross-section of a rolling bearing according to a second example of the invention, and
- Figure 9 is a cross-section of a rolling bearing according to a third example of the invention.

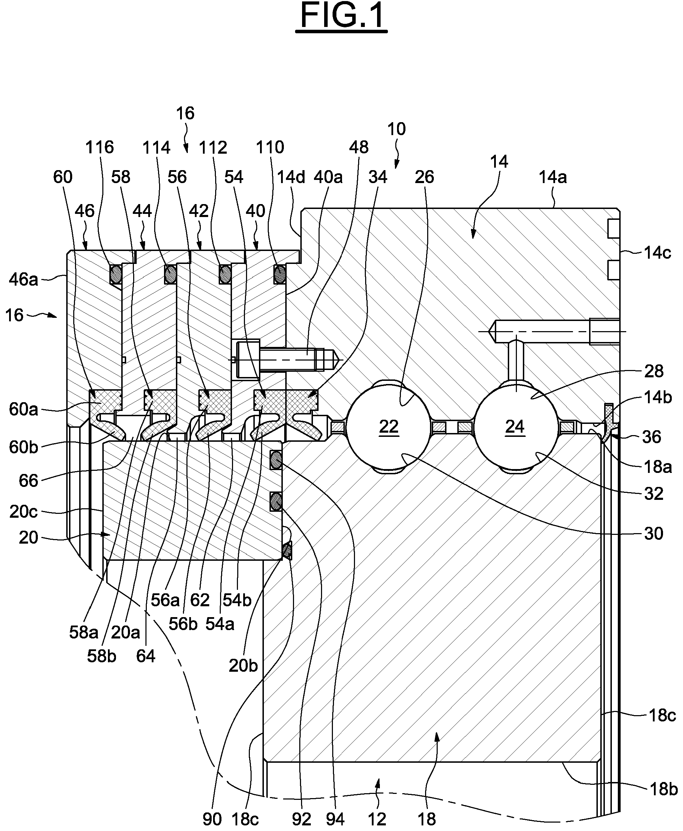

The rolling bearing as illustrated on Figure 1 is a large-diameter rolling bearing comprising a first ring 10 and a second ring 12. In the illustrated example, the first ring 10 is the outer ring whereas the second ring 12 is the inner ring. The rolling bearing may for example be used in a tidal or marine turbine power station a tunnel boring machine, a wind turbine, a big offshore crane or any other applications using a large diameter rolling bearing.

The outer and inner rings 10, 12 are concentric and extend axially along the bearing rotation axis (not shown) which runs in an axial direction. In this illustrated example, the rings 10, 12 are of the solid type.

The outer ring 10 comprises a rolling ring 14 and a sealing ring 16 secured to the rolling ring 14. The inner ring 12 also comprises a rolling ring 18 and a sealing ring 20 secured to the rolling ring 18. The sealing ring 16 of the outer ring radially surrounds the sealing ring 20 of the inner ring.

As will be described later, a plurality of successive seals are radially provided between the sealing rings 16, 20.

In the illustrated example, the rolling bearing also comprises two rows of balls 22, 24 which are arranged between first raceways 26, 28 of the rolling ring 14 of the outer ring and second raceways 30, 32 of the rolling ring 18 of the inner ring.

The rolling ring 18 of the inner ring comprises an outer cylindrical surface 18a from which the raceways 30, 32 are formed. The raceways 30, 32 are oriented radially outwards. The rolling ring 18 also comprises an inner cylindrical surface or bore 18b which is radially opposite to the outer surface 18a. The rolling ring 18 further comprises two opposite first and second frontal surfaces 18c, 18d which axially delimit the outer surface 18a and the bore 18b. The frontal surfaces 18c, 18d delimit the axial thickness of the rolling ring 18.

The rolling ring 14 of the outer ring comprises an outer cylindrical surface 14a and an inner cylindrical bore 14b which is radially opposite to the outer surface 14a and from which the raceways 26, 28 are formed. The raceways 26, 28 are oriented radially inwards. The rolling ring 14 further comprises two opposite first and second frontal surfaces 14c, 14d which axially delimit the outer surface 14a and the bore 14b. The frontal surfaces 14c, 14d delimit the axial thickness of the rolling ring 14.

The rolling bearing further comprises, axially on each side of the rolling rings 14 and 18, an annular seal 34, 36 mounted on the rolling ring 14 and provided to close the radial space that exists between the rolling rings 14, 18. This radial space is defined between the bore 14b of the rolling ring 14 and the outer surface 18a of the rolling ring 18. An annular closed rolling space (not referenced) is defined between the rolling rings 14, 18 and the seals 34, 36 in which the rows of balls 22, 24 are housed. Advantageously, the rolling space is filled with lubricant.

Each seal 34, 36 is mounted into a groove (not referenced) formed on the cylindrical bore 14b of the rolling ring 14 and comes into contact with the rolling ring 18. The seal 34 comes into contact with the outer surface 18a of the rolling ring 18. The seal 36 comes into contact with the frontal surface 18c of the rolling ring 18. Alternatively, it could be possible to provide a reversed arrangement for at least one of the seals 34, 36 with said seal mounted on the rolling ring 18 and coming into friction contact with the rolling ring 14.

The sealing ring 16 of the outer ring is mounted axially into contact against the frontal surface 14d of the rolling ring 14. The sealing ring 16 protrudes axially with regard to the rolling ring 14. The sealing ring 16 is reversely attached or secured to the rolling ring 14. The sealing ring 16 radially surrounds the sealing ring 20 of the inner ring. Each of the sealing rings 16, 20 may be made of stainless steel or treated steel with a painting or anti-corrosion treatment.

In the illustrated example, the sealing ring 16 is formed as a split ring and comprises first, second, third and fourth part rings 40 to 46 stacked one relative to the other in the axial direction. Alternatively, the sealing ring 16 may be made in one part.

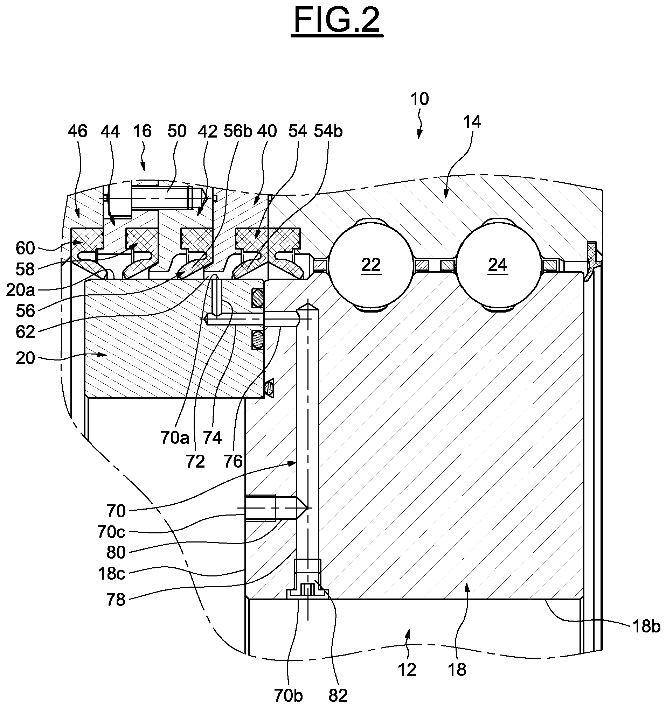

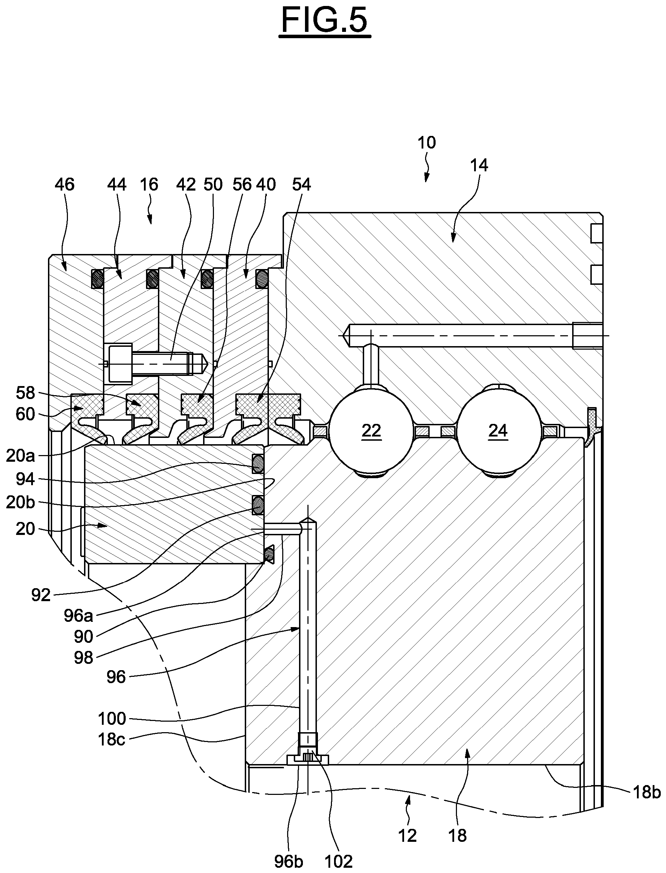

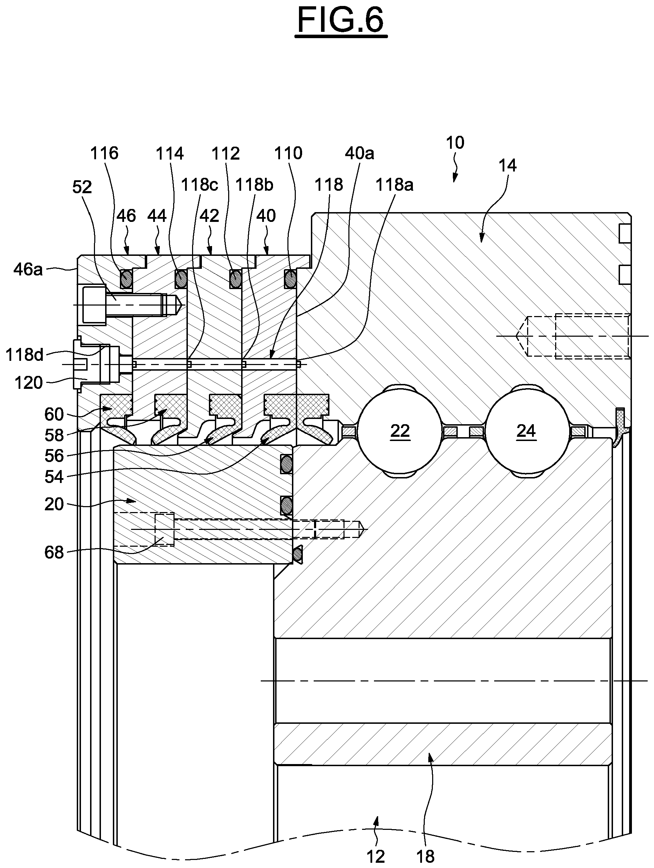

The first part ring 40 is reversely secured to the rolling ring 14 by screws 48 spaced apart in the circumferential direction. The first part ring 40 axially abuts against the frontal surface 14d of the rolling ring 14. Similarly, the second part ring 42 is reversely secured to the first part ring 40 by screws (not shown) axially on the side opposite to the rolling ring 14. The third part ring 44 is reversely secured to the second part ring 42 by screws 50 (Figures 2 and 5) axially on the side opposite to the first part ring 40. The fourth part ring 46 is reversely secured to the third part ring 44 by screws 52 (Figure 6) axially on the side opposite to the second part ring 42. The heads of the screws of the first part ring 40 may be recovered by potting material and embedded inside this material. Hence, the associated threads of the screws are sealed.

As previously mentioned, a plurality of successive annular seals are radially provided between the sealing ring 16 of the outer ring and the sealing ring 20 of the inner ring.

In the illustrated example, the rolling bearing is provided with first, second, third and fourth successive seals 54 to 60 supported by the sealing ring 16 of the outer ring. The sealing ring 16 bears the seals 54 to 60. The seals 54 to 60 are arranged successively in the axial direction.

The first, second, third and fourth successive seals 54 to 60 are respectively mounted on the first, second, third and fourth part rings 40 to 46 of the sealing ring. Hence, the first seal 54 is axially located on the side of the rolling ring 14, the fourth seal 60 is axially located on the exterior side of the rolling bearing, and the second and third seals 56, 58 are axially disposed between these two seals. The second seal 56 is axially locally inwards with respect to the third and fourth seals 58, 60. The first seal 54 is axially locally inwards with respect to the second seal 56.

Each seal 54 to 60 is provided with an annular heel 54a to 60a and with an annular friction lip 54b to 60b projecting from said heel. In the illustrated example, each friction lip 54b to 60b extends inwardly from the heel 54a to 60a. Here, each friction lip 54b to 60b extends obliquely. In the illustrated example, the lips 54b to 58b extend obliquely outwards while the lip 60b extends obliquely inwards.

The heel 54a to 60a of each seal is mounted in axial and radial contact against the associated first, second, third and fourth part ring 40 to 46 of the sealing ring. Here, the heel 54a of the first seal also axially abuts against the seal 34.

Each lip 54b to 60b comes into friction contact with the sealing ring 20 of the inner ring. The lips 54b to 60b come into friction contact with the outer surface of the sealing ring 20. The contact between each lip 54b to 60b and the sealing ring 20 is radial. The lips 54b to 60b are flexible in the radial direction. Preferably, the free end of each lip has a triangular shape in cross-section in order to reduce friction.

In the illustrated example, the seals 54 to 60 are identical to each other. Alternatively, the seals 54 to 60 may be different to one another. In the illustrated example, the rolling bearing comprises four seals 54 to 60. The number of seals may be different. For example, the rolling bearing may comprise at least two seals. The seals 54 to 60 may be made of elastomeric material, for example polyurethane.

The sealing lips 54b, 56b of the first and second seals delimit between the sealing ring 16 of the outer ring and the sealing ring 20 of the inner ring a first chamber 62.

Similarly, the sealing lips 56b, 58b of the second and third seals delimit between the sealing rings 16, 20 a second chamber 64. The second chamber 64 is axially offset outward with respect to the first chamber 62. The sealing lips 58b, 60b of the third and fourth seals delimit between the sealing rings 16, 20 a third chamber 66. The third chamber 66 is axially offset outward with respect to the second chamber 64. The chamber 64 is axially located between the first and second chambers 62, 66. The first, second and third chambers 62 to 66 are axially successive.

The sealing ring 20 of the inner ring reversely attached or secured to the rolling ring 18 by screws 68 (Figure 6). The heads of the screws 68 may be recovered by potting material and embedded inside this material. Hence, the associated threads of the screws 68 are sealed. The sealing ring 20 is mounted axially into contact against the frontal surface 18c of the rolling ring 18. The sealing ring 20 protrudes axially with regard to the rolling ring 18.

The sealing ring 20 comprises an outer cylindrical surface 20a, and an inner cylindrical surface or bore (not referenced) which is radially opposite to the outer surface 20, and two opposite first and second frontal surfaces 20b, 20c which axially delimit the outer surface 20a and the bore. The frontal surfaces 20b, 20c delimit the axial thickness of the sealing ring 20. The frontal surface 20b of the sealing ring is mounted axially into contact against the frontal surface 18c of the rolling ring 18. The friction lips 54b to 60b of the first, second, third and fourth successive seals 54 to 60 come into friction contact with the outer surface 20a of the sealing ring.

As shown on Figure 2, the rolling bearing comprises a first purging channel 70 provided through the inner ring 12 and in fluidic communication with the first chamber 62 delimited by the sealing lips 54b, 56b of the first and second seals. In use, the purging channel 70 enables to evacuate the fluid which can enter inside the sealed chamber 62. Prior to use, the purging channel 70 may be used to introduce lubricant, preferably grease, inside the chamber 62. Such lubricant forms an additional barrier against the ingress of contaminants.

In the illustrated example, the purging channel 70 is provided through the sealing ring 20 and the rolling ring 18 of the inner ring. The purging channel 70 is provided with an inlet orifice 70a opening into the first chamber 62. The inlet orifice 70a opens on the outer surface of the sealing ring 20 axially between the sealing lips 54b, 56b of the first and second seals.

The purging channel 70 is also provided with a first outlet orifice 70b opposite to the inlet orifice 70a and opening on the bore 18b of the rolling ring 18 which is accessible from the outside of the rolling bearing. In the illustrated example, the purging channel 70 is further provided with a second outlet orifice 70c opposite to the inlet orifice 70a and opening on the frontal surface 18c of the rolling ring 18 which is accessible from the outside of the rolling bearing. Alternatively, the purging channel 70 may be provided only with the outlet orifice 70b or 70c.

The purging channel 70 is made of several holes provided into the thickness of the sealing ring 20 and the rolling ring 18. The purging channel 70 comprises a first radial hole 72 provided with the inlet orifice 70a and a second axial hole 74 connected to the first radial hole 72, said holes being both formed in the thickness of the sealing ring 20. Alternatively, the purging channel 70 may comprise several radial holes 72 each provided with an inlet orifice 70a opening into the first chamber 62 and each connected to the second axial hole 74. In this case, the radial holes 72 are spaced apart in the circumferential direction.

The purging channel 70 also comprises a third axial hole 76, a fourth radial hole 78 and a fifth axial hole 80 both formed in the thickness of the rolling ring 18. The third axial hole 76 axially faces the second axial hole 74, the fourth radial hole 78 is connected to the third axial hole 76 and provided with the outlet orifice 70b, and the fifth axial hole 80 is connected to the fourth radial hole 78 and provided with the outlet orifice 70c.

The rolling bearing also comprises a first closing plug 82 attached at the outlet orifice 70b of the purging channel. The closing plug 82 may be attached to the outlet orifice 70b by any appropriate means, for example by screwing. Preferably, the closing plug 82 is made of transparent material in order to be able to visually detect the presence of contaminant fluid during an inspection of the rolling bearing. In the illustrated example, the closing plug 82 does not radially protrude with respect to the bore 18b of the rolling ring. The closing plug 82 may be recovered by potting material and embedded inside this material. Hence, the associated thread of the closing plug 82 is sealed.

As previously mentioned, in the illustrated example, the purging channel 70 is also provided with the second outlet orifice 70c. The rolling bearing may be provided with a plug or with a sensor (not illustrated) mounted at the outlet orifice 70c to detect water.

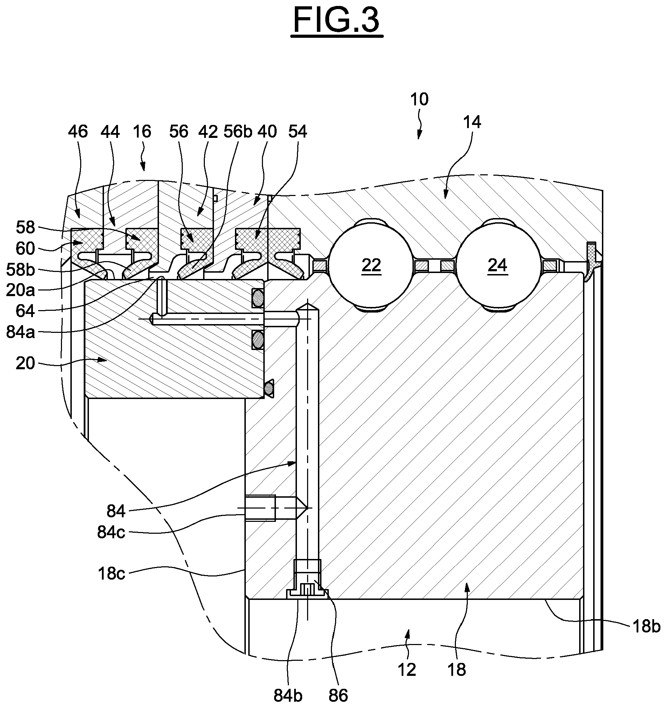

As shown on Figure 3, the rolling bearing comprises a second purging channel 84 provided through the inner ring 12 and in fluidic communication with the second chamber 64 delimited by the sealing lips 56b, 58b of the second and third seals. In use, the purging channel 84 enables to evacuate the fluid which can enter inside the sealed chamber 64. Prior to use, the purging channel 84 may be used to introduce lubricant, preferably grease, inside the chamber 64. Such lubricant forms an additional barrier against the ingress of contaminants.

In the illustrated example, the purging channel 84 is provided through the sealing ring 20 and the rolling ring 18 of the inner ring. The purging channel 84 is provided with an inlet orifice 84a opening into the second chamber 64. The inlet orifice 84a opens on the outer surface of the sealing ring 20 axially between the sealing lips 56b, 58b of the second and third seals.

The purging channel 84 is also provided with a first outlet orifice 84b opposite to the inlet orifice 84a and opening on the bore 18b of the rolling ring 18. In the illustrated example, the purging channel 84 is further provided with a second outlet orifice 84c opposite to the inlet orifice 84a and opening on the frontal surface 18c of the rolling ring 18. Alternatively, the purging channel 84 may be provided only with the outlet orifice 84b or 84c.

Similarly to the purging channel 70, the purging channel 84 is made of several holes provided into the thickness of the sealing ring 20 and the rolling ring 18. The purging channel 84 is offset in the circumferential direction with respect to the purging channel 70.

The rolling bearing also comprises a second closing plug 86 attached at the outlet orifice 84b of the purging channel. The closing plug 86 may be attached to the outlet orifice 84b by any appropriate means, for example by screwing. Preferably, the closing plug 86 is made of transparent material in order to be able to visually detect the presence of contaminant fluid during an inspection of the rolling bearing. In the illustrated example, the closing plug 86 does not radially protrude with respect to the bore 18b of the rolling ring. The closing plug 86 may be recovered by potting material and embedded inside this material. Hence, the associated thread of the closing plug 86 is sealed.

As previously mentioned, in the illustrated example, the purging channel 84 is also provided with the second outlet orifice 84c. The rolling bearing may be provided with a plug or with a sensor (not illustrated) mounted at the outlet orifice 84c to detect water.

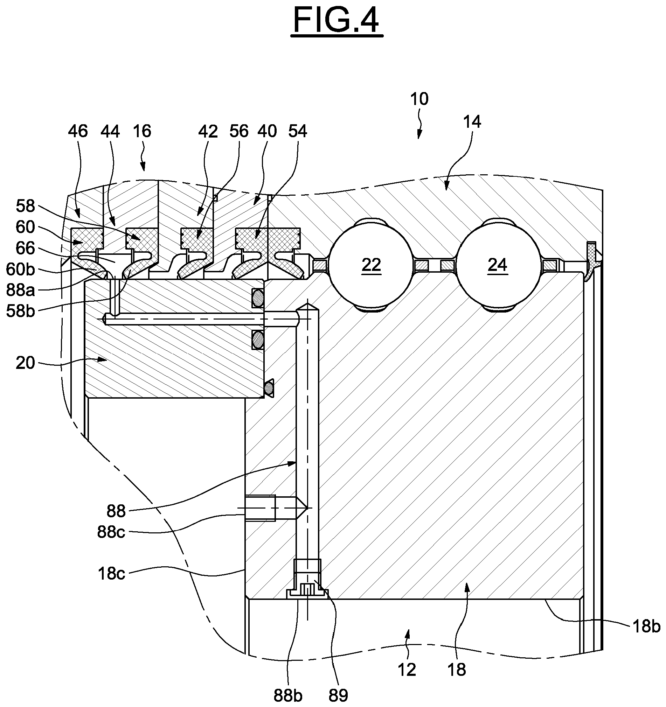

As shown on Figure 4, the rolling bearing comprises a third purging channel 88 provided through the inner ring 12 and in fluidic communication with the third chamber 66 delimited by the sealing lips 58b, 60b of the third and fourth seals. In use, the purging channel 88 enables to evacuate the fluid which can enter inside the sealed chamber 66. Prior to use, the purging channel 88 may be used to introduce lubricant, preferably grease, inside the chamber 66. Such lubricant forms an additional barrier against the ingress of contaminants. In a preferred embodiment, lubricant is provided only inside the first and second chambers 62, 64. In such case, the aim of the third purging channel 88 is only to evacuate the fluid which can enter inside the third chamber 66.

In the illustrated example, the purging channel 88 is provided through the sealing ring 20 and the rolling ring 18 of the inner ring. The purging channel 88 is provided with an inlet orifice 88a opening into the third chamber 66. The inlet orifice 88a opens on the outer surface of the sealing ring 20 axially between the sealing lips 58b, 60b of the third and fourth seals.

The purging channel 88 is also provided with a first outlet orifice 88b opposite to the inlet orifice 88a and opening on the bore 18b of the rolling ring 18. In the illustrated example, the purging channel 88 is further provided with a second outlet orifice 88c opposite to the inlet orifice 88a and opening on the frontal surface 18c of the rolling ring 18. Alternatively, the purging channel 84 may be provided only with the outlet orifice 88b or 88c.

Similarly to the purging channels 70 and 84, the purging channel 88 is made of several holes provided into the thickness of the sealing ring 20 and the rolling ring 18. The purging channel 88 is offset in the circumferential direction with respect to the purging channels 70, 84.

In the illustrated example, the purging channels 70, 84 and 88 are distinct from each other. Alternatively, some holes may be shared by at least two of these purging channels, namely the axial hole 76 and radial hole 78.

In the illustrated example, each of the purging channels 70, 84 and 88 is provided through the sealing ring 20 and the rolling ring 18 of the inner ring. Alternatively, at least one these purging channels 70, 84 and 88 may be provided only through the sealing ring 20.

The rolling bearing also comprises a third closing plug 89 attached at the outlet orifice 88b of the purging channel. The closing plug 89 may be attached to the outlet orifice 88b by any appropriate means, for example by screwing. Preferably, the closing plug 89 is made of transparent material in order to be able to visually detect the presence of contaminant fluid during an inspection of the rolling bearing. In the illustrated example, the closing plug 89 does not radially protrude with respect to the bore 18b of the rolling ring. The closing plug 89 may be recovered by potting material and embedded inside this material. Hence, the associated thread of the closing plug 89 is sealed.

As previously mentioned, in the illustrated example, the purging channel 88 is also provided with the second outlet orifice 88c. The rolling bearing may be provided with a plug or with a sensor (not illustrated) mounted at the outlet orifice 88c to detect water.

As shown notably on Figures 1 and 5, in the illustrated example, the rolling bearing is further provided with first, second and third successive annular sealing members 90 to 94 axially interposed between the rolling ring 18 and the sealing ring 20 of the inner ring. The sealing members 90 to 94 are arranged successively in the radial direction.

The sealing members 90 to 94 are axially interposed between the frontal surface 18c of the rolling ring 18 and the frontal surface 20b of sealing ring. Here, the rolling ring 18 bears the first sealing member 90 and the sealing ring 20 bears the second and third sealing members 92, 94. Alternatively, it could be possible to foresee a reversed arrangement of the sealing members 90 to 94 on the rolling and sealing rings 18, 20. Grooves (not referenced) are provided on the frontal surfaces 18c, 20b to receive the sealing members 90 to 94. In the illustrated example, the sealing members 90 to 94 have in cross-section a circular shape. Alternatively, the sealing members 90 to 94 may have other shapes.

The sealing member 90 is radially offset inwards with respect to the sealing member 92, and the sealing member 92 is radially offset inwards with respect to the sealing member 74.

In the illustrated example, the rolling bearing comprises three sealing members 90 to 94. The number of seals may be different. For example, the rolling bearing may comprise only the two sealing members 90 and 92. The sealing members 90 to 94 may be made of elastomeric material, for example polyurethane.

The rolling bearing further comprises a first leakage test channel 96 provided through the inner ring 12. In the illustrated example, the leakage test channel 96 is provided through the rolling ring 18 of the inner ring.

The leakage test channel 96 is provided with an inlet orifice 96a opening on the frontal surface 18c of the rolling ring in a zone located radially between the sealing members 90, 92. The leakage test channel 96 is provided with an outlet orifice 96b opposite to the inlet orifice 96a and opening on the bore 18b of the rolling ring which is accessible from the outside of the rolling bearing.

Prior to use of the rolling bearing, the leakage test channel 96 enables to introduce a fluid radially between the sealing members 90, 92 at the junction between the frontal surface 18c of the rolling ring and the frontal surface 20b of the sealing ring. Hence, the efficiency of the sealing members 90, 92 may be tested. The introduced fluid may be compressed air, lubricant, coloured liquid, etc.

In use, the leakage test channel 96 enables to evacuate the fluid which can enter in the zone located radially between the sealing members 90, 92 at the junction between the frontal surface 18c of the rolling ring and the frontal surface 20b of the sealing ring.

The leakage test channel 96 is made of several holes provided into the thickness of the rolling ring 18. The leakage test channel 96 comprises a first axial hole 98 provided with the inlet orifice 96a and a second radial hole 100 connected to the first radial hole 98 and provided with the outlet orifice 96b, said holes being both formed in the thickness of the rolling ring 18.

The rolling bearing also comprises a fourth closing plug 102 attached at the outlet orifice 96b of the leakage test channel. The closing plug 102 may be attached to the outlet orifice 96b by any appropriate means, for example by screwing. Preferably, the closing plug 102 is made of transparent material in order to be able to visually detect the presence of contaminant fluid during an inspection of the rolling bearing. In the illustrated example, the closing plug 102 does not radially protrude with respect to the bore 18b of the rolling ring. The closing plug 102 may be recovered by potting material and embedded inside this material. Hence, the associated thread of the closing plug 102 is sealed.

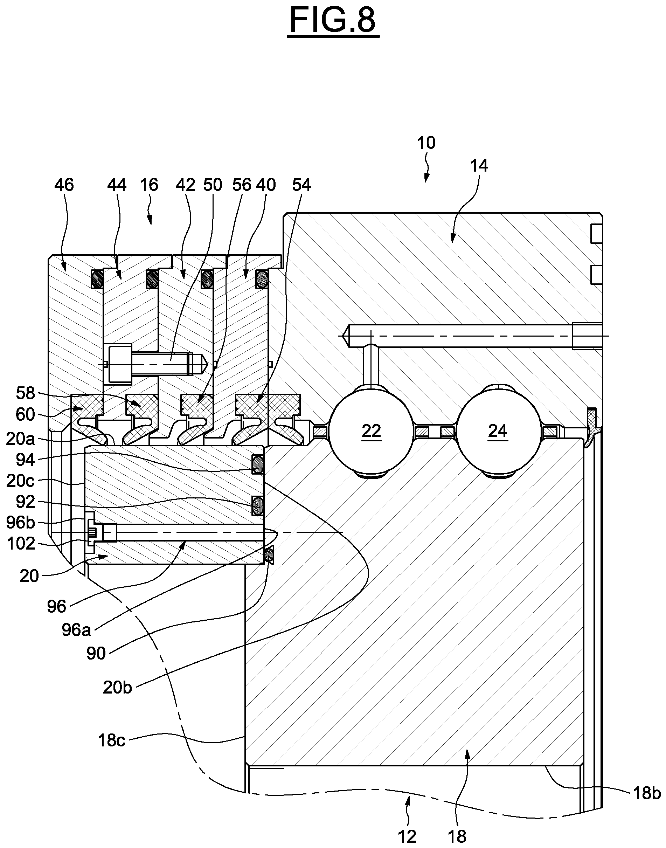

As previously mentioned, in the illustrated example, the leakage test channel 96 is provided through the rolling ring 18 of the inner ring. Alternatively, as shown on Figure 8, the first leakage test channel 96 may be provided through the sealing ring 20.

In this alternative embodiment, the inlet orifice 96a of the leakage test channel 96 opens on the frontal surface 20b of the sealing ring and the outlet orifice 96b opens on the opposite frontal surface 20c which is accessible from the outside of the rolling bearing. The leakage test channel 96 is here made of one single hole provided into the thickness of the sealing ring 20.

Referring once again to Figures 1 and 6, in the first illustrated example, the rolling bearing is further provided with a first seal member 110 axially interposed between the first part ring 40 of the sealing ring and the rolling ring 14 of the outer ring. The seal member 110 is axially interposed between the frontal surface 14d of the rolling ring and the frontal surface 40a of the first part ring 40 axially bearing against this frontal surface 14d. A groove (not referenced) is provided on this frontal surface 40a of the first part ring 40. Hence, the first part ring 40 here bears the sealing member 110. Alternatively, the rolling ring 14 may bear the sealing member 110. The seal member 110 is radially offset outwards with respect to the first seal 54. The seal member 110 radially surrounds the first seal 54.

The rolling bearing is also provided with a second seal member 112 axially interposed between the first and second part rings 40, 42 of the sealing ring. The seal member 112 is axially interposed between the frontal surfaces of the first and second part rings 40, 42 in axial contact one against the other. A groove (not referenced) is provided on this frontal surface of the second part ring 42. Hence, the second part ring 42 here bears the sealing member 112. Alternatively, the first part ring 40 may bear the sealing member 112. The seal member 112 is radially offset outwards with respect to the second seal 56. The seal member 112 radially surrounds the second seal 56.

The rolling bearing is further provided with a third seal member 114 axially interposed between the second and third part rings 42, 44 of the sealing ring. The seal member 114 is axially interposed between the frontal surfaces of the second and third part rings 42, 44 in axial contact one against the other. A groove (not referenced) is provided on this frontal surface of the third part ring 44. Hence, the third part ring 44 here bears the sealing member 114. Alternatively, the second part ring 42 may bear the sealing member 114. The seal member 114 is radially offset outwards with respect to the third seal 58. The seal member 114 radially surrounds the third seal 58.

The rolling bearing is further provided with a fourth seal member 116 axially interposed between the third and fourth part rings 44, 46 of the sealing ring. The seal member 116 is axially interposed between the frontal surfaces of the third and fourth part rings 44, 46 in axial contact one against the other. A groove (not referenced) is provided on this frontal surface of the fourth part ring 46. Hence, the fourth part ring 46 here bears the sealing member 116. Alternatively, the third part ring 44 may bear the sealing member 116. The seal member 116 is radially offset outwards with respect to the fourth seal 60. The seal member 116 radially surrounds the fourth seal 60. The seal members 110 to 116 are aligned in the axial direction.

The rolling bearing comprises a second leakage test channel 118 provided through the sealing ring 16 of the outer ring. The leakage test channel 118 is provided through the axial thickness of the sealing ring 16. The leakage test channel 118 extends axially through the first, second, third and fourth parts 40 to 46 of the sealing ring 16. Alternatively, the leakage test channel 118 may be provided through the rolling ring 14.

The leakage test channel 118 is provided with a first inlet orifice 118a opening on the frontal surface 40a of the first part 40 of the sealing ring, which is in axial contact with the rolling ring 14, in a zone located radially between the sealing member 110 and the seal 54.

The leakage test channel 118 is also provided with a second inlet orifice 118b opening on the frontal surface of the second part 42 of the sealing ring, which is in axial contact with the first part 40, in a zone located radially between the sealing member 112 and the seal 56. The leakage test channel 96 is further provided with a third inlet orifice 118c opening on the frontal surface of the third part 44 of the sealing ring, which is in axial contact with the second part 42, in a zone located radially between the sealing member 114 and the seal 58.

The leakage test channel 118 is also provided with an outlet orifice 118d opening on the frontal surface of the fourth part 44 of the sealing ring which is oriented axially outwards and accessible from the outside of the rolling bearing. The frontal surface 46a is located axially on the side opposite of the third part 44. The frontal surfaces 40a, 46a delimit the axial thickness of the sealing ring 16. The leakage test channel 118 is made of several axial aligned through-holes provided into the thickness of the sealing ring 16. The inlet orifices 118a to 118c and the outlet orifice 118d are aligned in the axial direction.

Prior to use of the rolling bearing, the leakage test channel 118 enables to introduce a fluid radially between the sealing member 110 and the seal 54 at the junction between the rolling ring 14 and the first part 40, and radially between the sealing member 112 and the seal 56 at the junction between the first and second parts 40 and 42, and radially between the sealing member 114 and the seal 58 at the junction between the second and third parts 42 and 44, and radially between the sealing member 116 and the seal 60 at the junction between the third and the fourth parts 44, 46. Hence, the efficiency of the sealing members 110 to 116 and the seals 54 to 60 may be tested. The introduced fluid may be compressed air, lubricant, coloured liquid, etc.

In use, the leakage test channel 118 enables to evacuate the fluid which can enter in the zone located radially between the sealing member 110 and the seal 54 at the junction between the rolling ring 14 and the first part 40, and in the zone located radially between the sealing member 112 and the seal 56 at the junction between the first and second parts 40 and 42, and in the zone located radially between the sealing member 114 and the seal 58 at the junction between the second and third parts 42 and 44, and in the zone located radially between the sealing member 116 and the seal 60 at the junction between the third and the fourth parts 44, 46.

The rolling bearing also comprises a fifth closing plug 120 attached at the outlet orifice 118b of the leakage test channel. The closing plug 120 may be attached to the outlet orifice 118b by any appropriate means, for example by screwing. Preferably, the closing plug 120 is made of transparent material in order to be able to visually detect the presence of contaminant fluid during an inspection of the rolling bearing. In the illustrated example, the closing plug 120 axially protrudes with respect to the frontal surface 46a of the fourth part 46 of the sealing ring. The closing plug 120 may be recovered by potting material and embedded inside this material. Hence, the associated thread of the closing plug 120 is sealed.

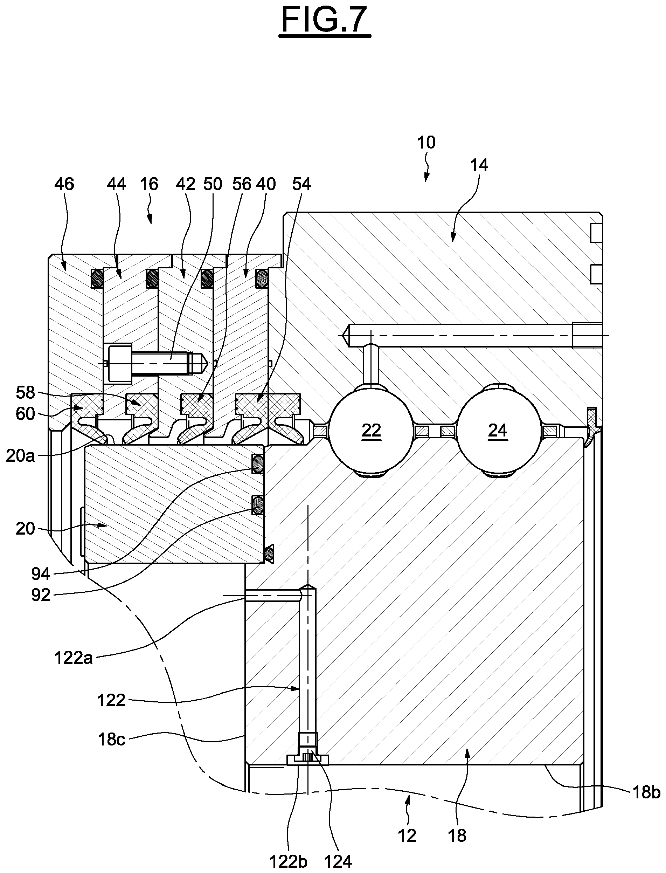

As shown on Figure 7, in the illustrated example, the rolling bearing further comprises a third leakage test channel 122 provided through the rolling ring 18 of the inner ring

The leakage test channel 122 is provided with an inlet orifice 122a opening on the frontal surface 18c of the rolling ring in a zone radially offset inward with respect to the sealing ring 20. The leakage test channel 122 is provided with an outlet orifice 122b opposite to the inlet orifice 122a and opening on the bore 18b of the rolling ring. The leakage test channel 122 is made of several holes provided into the thickness of the rolling ring 18. The leakage test channel 122 comprises a first axial hole (not referenced) provided with the inlet orifice 122a and a second radial hole (not referenced) connected to the first radial hole and provided with the outlet orifice 122b, said holes being both formed in the thickness of the rolling ring 18.

The zone of the frontal surface 18c of the rolling ring onto which opens the inlet orifice 122a is intended to be in axial contact with a frame of the associated machine (not referenced) provided with two seals. The inlet orifice 122a is radially located between these two seals.

Prior to use, the leakage test channel 112 enables to introduce a fluid radially between these seals to test their efficiency. The introduced fluid may be compressed air, lubricant, coloured liquid, etc.

In use, the leakage test channel 112 enables to evacuate the fluid which can enter in the zone located radially between these seals at the junction between the frontal surface 18c of the rolling ring and the frame of the associated machine.

The rolling bearing also comprises a fifth closing plug 124 attached at the outlet orifice 112b of the leakage test channel. The closing plug 124 may be attached to the outlet orifice 112b by any appropriate means, for example by screwing. Preferably, the closing plug 124 is made of transparent material in order to be able to visually detect the presence of contaminant fluid during an inspection. In the illustrated example, the closing plug 124 does not radially protrude with respect to the bore 18b of the rolling ring. The closing plug 124 may be recovered by potting material and embedded inside this material. Hence, the associated thread of the closing plug 124 is sealed.

Alternatively, the rolling bearing may be deprived of the first leakage test channel and/or the second leakage test channel and/or the third leakage test channel.

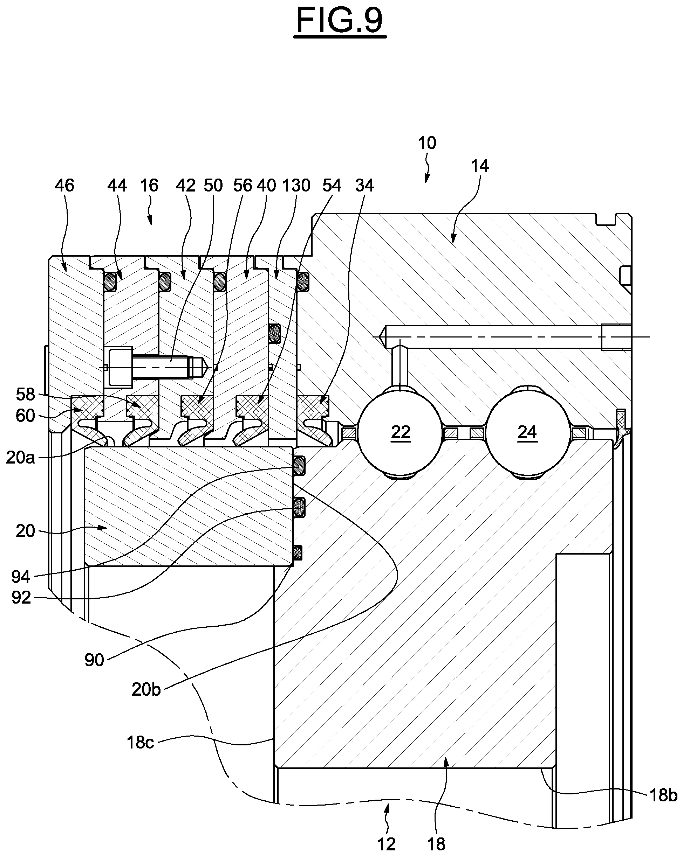

The example shown on Figure 9, in which identical parts are given identical references, differs from the first example in that the sealing ring 16 of the outer ring is further provided with a spacer 130 interposed axially between the rolling ring 14 and the first part ring 40. Here, the first seal 54 is axially spaced with respect the seal 34. In this example, the axial length of the sealing ring 20 of the inner ring is increased.

The spacer 130 allows the sealing lips of the seals 54 to 60 to adopt two different axial positions, namely the first one with this spacer and the second one with the removing of the spacer and the axial contact of the first part 40 directly against the rolling ring 14. By removing the spacer 130, the seals 54 to 60 are axially displaced along the outer surface 20a of the sealing ring of the inner ring.

Otherwise, as previously mentioned, in the illustrated examples, the first ring of the rolling bearing is the outer ring whereas the second ring is the inner ring. As an alternative, it could be possible to provide a reversed arrangement with the first ring forming the inner ring and the second ring forming the outer ring.

In the described examples, the rolling bearing comprises two rows of rolling elements. Alternatively, the rolling bearing may comprise only one row of rolling elements, or three or more rows of rolling elements. In the illustrated example, the rolling elements are balls. The rolling bearing may comprise other types of rolling elements, for example rollers.

## Claims

1. Rolling bearing comprising a first ring (10) and a second ring (12) capable of rotating concentrically relative to one another, and at least one row of rolling elements (22) arranged between first and second raceways (26, 30) of the said first and second rings, the first ring (10) comprising at least one first rolling ring (14) provided with said first raceway (26) and at least one first sealing ring (16) secured to the first rolling ring, and the second ring (12) comprising at least one second rolling ring (18) provided with said second raceway (30) and at least one second sealing ring (20) secured to the second rolling ring, the rolling bearing further comprising at least first and second successive seals (54, 56) supported by said first sealing ring (16) of the first ring and each provided with at least one sealing lip (54b, 56b) coming into contact with said second sealing ring (20) of the second ring, the sealing lips (54b, 56b) of said first and second successive seals delimiting between said first and second sealing rings (16, 20) a first chamber (62), **characterized in that** at least a first purging channel (70) is provided through the second ring (12) and comprises at least one inlet orifice (70a) opening into the first chamber (62) and at least one outlet orifice (70b) opening on a surface (18b) of the second ring which is accessible from the outside of the rolling bearing.

2. Rolling bearing according to claim 1, wherein said first purging channel (70) is provided through said second sealing ring (20) and said second rolling ring (18) of the second ring, the surface onto which opens said outlet orifice (70b) of said first purging channel is located on said second rolling ring (18).

3. Rolling bearing according to claim 1 or 2, further comprising at least one closing element (82) reversely attached at said outlet orifice (70b) of said first purging channel.

4. Rolling bearing according to claim 3, wherein said closing element (82) is made of transparent material.

5. Rolling bearing according to any of the preceding claims, further comprising at least a third seal (58) supported by said first sealing ring (16) of the first ring and provided with at least one sealing lip (58b) coming into contact with said second sealing ring (20) of the second ring, the sealing lips (56b, 58b) of said second and third seals delimiting between said first and second sealing rings (16, 20) a second chamber (64), and at least a second purging channel (84) being provided through the second ring (12) and comprising at least one inlet orifice (84a) opening into the second chamber (64) and at least one outlet orifice (84b) opening on a surface (18b) of the second ring which is accessible from the outside of the rolling bearing.

6. Rolling bearing according to any of the preceding claims, further comprising at least first and second successive sealing members (90, 92) axially interposed between said second rolling ring (18) and said second sealing ring (20) of the second ring, and at least one leakage channel (96) provided through said second rolling ring (18), or said second sealing ring (20), and comprising at least one inlet orifice (96a) opening on a frontal surface of said second rolling ring, or said second sealing ring, in a zone located radially between the first and second successive sealing members and at least one outlet orifice (96b) opening on a surface (18b) of said second rolling ring, or said second sealing ring, which is accessible from the outside of the rolling bearing.

7. Rolling bearing according to any of the preceding claims, further comprising at least a first seal member (110) axially interposed between said first rolling ring (14) and said first sealing ring (16) of the first ring and radially offset with respect to the first seal (54), and at least one leakage channel (118) provided through said first rolling ring (14), or said first sealing ring (16), and comprising at least one inlet orifice (118a) opening on a frontal surface of said first rolling ring (14), or said first sealing ring (16), in a zone located radially between the first seal member (110) and the first seal (54) and at least one outlet orifice (118d) opening on a surface of the said first rolling ring, or said first sealing ring, which is accessible from the outside of the rolling bearing.

8. Rolling bearing according to claim 7, wherein said first sealing ring (16) of the first ring is formed as a split ring and comprises at least a first part ring (40) and a second part ring (40) axially stacked, the first and second successive seals (54, 56) being respectively supported by the first and second part rings (40, 42), the first seal member (110) being axially interposed between said first rolling ring (14) and the first part ring (40) of said first sealing ring (16) of the first ring.

9. Rolling bearing according to claim 8, wherein said leakage channel (118) extends axially through the first and second part rings (40, 42) of said first sealing ring (16).

10. Rolling bearing according to any of the preceding claims, further comprising, axially on each side of said first and second rolling rings (14, 18) of the first and second rings, seals (34, 36) delimiting radially between said first and second rolling rings a closed rolling space inside which is housed said row of rolling elements (22), said seals (34, 36) being distinct from the first and second successive seals (54, 56).

## Patentansprüche

1. Wälzlager, umfassend einen ersten Ring (10) und einen zweiten Ring (12), die sich konzentrisch relativ zueinander drehen können, und mindestens eine Reihe von Wälzelementen (22), die zwischen einer ersten und einer zweiten Laufbahn (26, 30) des ersten und des zweiten Rings angeordnet sind, wobei der erste Ring (10) mindestens einen ersten Wälzring (14), der mit der ersten Laufbahn (26) versehen ist, und mindestens einen ersten Dichtring (16) umfasst, der an dem ersten Wälzring befestigt ist, und wobei der zweite Ring (12) mindestens einen zweiten Wälzring (18), der mit der zweiten Laufbahn (30) versehen ist, und mindestens einen zweiten Dichtring (20), der an dem zweiten Wälzring befestigt ist, umfasst, wobei das Wälzlager ferner mindestens eine erste und eine zweite aufeinanderfolgende Dichtung (54, 56) umfasst, die durch den ersten Dichtring (16) des ersten Rings getragen werden und jeweils mit mindestens einer Dichtlippe (54b, 56b) in Kontakt mit dem zweiten Dichtring (20) des zweiten Rings kommen, wobei die Dichtlippen (54b, 56b) der ersten und der zweiten aufeinanderfolgenden Dichtung zwischen dem ersten und dem zweiten Dichtring (16, 20) eine erste Kammer (62) begrenzen, **dadurch gekennzeichnet, dass** mindestens ein erster Spülkanal (70) durch den zweiten Ring (12) bereitgestellt ist und mindestens eine Einlassöffnung (70a), die in die erste Kammer (62) mündet, und mindestens eine Auslassöffnung (70b) umfasst, die an einer von außen des Wälzlagers zugänglichen Oberfläche (18b) des zweiten Rings mündet.

2. Wälzlager nach Anspruch 1, wobei der erste Spülkanal (70) durch den zweiten Dichtring (20) und den zweiten Wälzring (18) des zweiten Rings bereitgestellt ist, wobei die Oberfläche, auf die die Auslassöffnung (70b) des ersten Spülkanals mündet, auf dem zweiten Wälzring (18) angeordnet ist.

3. Wälzlager nach Anspruch 1 oder 2, ferner umfassend mindestens ein Schließelement (82), das rückseitig an der Auslassöffnung (70b) des ersten Spülkanals angebracht ist.

4. Wälzlager nach Anspruch 3, wobei das Schließelement (82) aus transparentem Material gebildet ist.

5. Wälzlager nach einem der vorhergehenden Ansprüche, ferner umfassend mindestens eine dritte Dichtung (58), die durch den ersten Dichtring (16) des ersten Rings getragen wird und mit mindestens einer Dichtlippe (58b) versehen ist, die mit dem zweiten Dichtring (20) des zweiten Rings in Kontakt kommt, wobei die Dichtlippen (56b, 58b) der zweiten und der dritten Dichtung zwischen dem ersten und dem zweiten Dichtring (16, 20) eine zweite Kammer (64) begrenzen, und mindestens einen zweiten Spülkanal (84), der durch den zweiten Ring (12) bereitgestellt wird, und mindestens eine Einlassöffnung (84a), die in die zweite Kammer (64) mündet, und mindestens eine Auslassöffnung (84b) umfasst, die an einer von außen des Wälzlagers zugänglichen Oberfläche (18b) des zweiten Rings mündet.

6. Wälzlager nach einem der vorhergehenden Ansprüche, ferner umfassend mindestens ein erstes und ein zweites aufeinanderfolgendes Dichtelement (90, 92), die axial hintereinander zwischen dem zweiten Wälzring (18) und dem zweiten Dichtring (20) des zweiten Rings angeordnet sind, sowie mindestens einen Leckagekanal (96), der durch den zweiten Wälzring (18) oder den zweiten Dichtring (20) vorgesehen ist und mindestens eine Einlassöffnung (96a) aufweist, die auf einer Stirnfläche des zweiten Wälzrings oder des zweiten Dichtrings in einem Bereich mündet, der radial zwischen dem ersten und dem zweiten aufeinanderfolgenden Dichtelement angeordnet ist, sowie mindestens eine Auslassöffnung (96b), die auf einer von außen des Wälzlagers zugänglichen Oberfläche (18b) des zweiten Wälzrings oder des zweiten Dichtrings mündet.

7. Wälzlager nach einem der vorhergehenden Ansprüche, ferner umfassend mindestens ein erstes Dichtelement (110), das axial zwischen dem ersten Wälzring (14) und dem ersten Dichtring (16) des ersten Rings angeordnet und radial in Bezug auf die erste Dichtung (54) versetzt ist, sowie mindestens einen Leckagekanal (118), der durch den ersten Wälzring (14) oder den ersten Dichtring (16) vorgesehen ist und mindestens eine Einlassöffnung (118a) umfasst, die auf einer Stirnfläche des ersten Wälzrings (14) oder des ersten Dichtrings (16) in einem Bereich mündet, der radial zwischen dem ersten Dichtelement (110) und der ersten Dichtung (54) angeordnet ist, sowie mindestens eine Auslassöffnung (118d), die auf einer von außen des Wälzlagers zugänglichen Oberfläche des ersten Wälzrings oder des ersten Dichtrings mündet.

8. Wälzlager nach Anspruch 7, wobei der erste Dichtring (16) des ersten Rings als geteilter Ring ausgebildet ist und mindestens einen ersten Teilring (40) und einen zweiten Teilring (40) umfasst, die axial übereinander angeordnet sind, wobei die erste und die zweite aufeinanderfolgende Dichtung (54, 56) durch den ersten bzw. den zweiten Teilring (40, 42) getragen werden, und das erste Dichtelement (110) axial zwischen dem ersten Wälzring (14) und dem ersten Teilring (40) des ersten Dichtrings (16) des ersten Rings angeordnet ist.

9. Wälzlager nach Anspruch 8, wobei sich der Leckagekanal (118) axial durch den ersten und den zweiten Teilring (40, 42) des ersten Dichtrings (16) erstreckt.

10. Wälzlager nach einem der vorhergehenden Ansprüche, ferner umfassend axial auf jeder Seite des ersten und des zweiten Wälzrings (14, 18) des ersten und des zweiten Rings Dichtungen (34, 36), die radial zwischen dem ersten und dem zweiten Wälzring einen geschlossenen Wälzraum begrenzen, in dem die Reihe von Wälzelementen (22) untergebracht ist, wobei sich die Dichtungen (34, 36) von der ersten und der zweiten aufeinanderfolgenden Dichtung (54, 56) unterscheiden.

## Revendications

1. Palier à roulement comprenant une première bague (10) et une seconde bague (12) pouvant tourner concentriquement l'une par rapport à l'autre, et au moins une rangée d'éléments de roulement (22) disposés entre des première et seconde pistes (26, 30) desdites première et seconde bagues, la première bague (10) comprenant au moins une première bague de roulement (14) munie de ladite première piste (26) et au moins une première bague d'étanchéité (16) fixée solidement à la première bague de roulement, et la seconde bague (12) comprenant au moins une seconde bague de roulement (18) pourvue de ladite seconde piste (30) et au moins une seconde bague d'étanchéité (20) fixée solidement à la seconde bague de roulement, le palier à roulement comprenant en outre au moins des premier et deuxième joints d'étanchéité (54, 56) successifs supportés par ladite première bague d'étanchéité (16) de la première bague et pourvus chacun d'au moins une lèvre d'étanchéité (54b, 56b) venant en contact avec ladite seconde bague d'étanchéité (20) de la seconde bague, les lèvres d'étanchéité (54b, 56b) desdits premier et deuxième joints d'étanchéité successifs délimitant entre lesdites première et seconde bagues d'étanchéité (16, 20) une première chambre (62), **caractérisé en ce qu'**au moins un premier canal de purge (70) est ménagé à travers la seconde bague (12) et comprend au moins un orifice d'entrée (70a) débouchant dans la première chambre (62) et au moins un orifice de sortie (70b) débouchant sur une surface (18b) de la seconde bague qui est accessible depuis l'extérieur du palier à roulement.

2. Palier à roulement selon la revendication 1, ledit premier canal de purge (70) étant ménagé à travers ladite seconde bague d'étanchéité (20) et ladite seconde bague de roulement (18) de la seconde bague, la surface sur laquelle débouche ledit orifice de sortie (70b) dudit premier canal de purge étant située sur ladite seconde bague de roulement (18).

3. Palier à roulement selon la revendication 1 ou 2, comprenant en outre au moins un élément de fermeture (82) fixé en sens inverse audit orifice de sortie (70b) dudit premier canal de purge.

4. Palier à roulement selon la revendication 3, ledit élément de fermeture (82) étant en un matériau transparent.

5. Palier à roulement selon l'une quelconque des revendications précédentes, comprenant en outre au moins un troisième joint d'étanchéité (58) supporté par ladite première bague d'étanchéité (16) de la première bague et pourvu d'au moins une lèvre d'étanchéité (58b) venant en contact avec ladite seconde bague d'étanchéité (20) de la seconde bague, les lèvres d'étanchéité (56b, 58b) desdits deuxième et troisième joints d'étanchéité délimitant entre lesdites première et seconde bagues d'étanchéité (16, 20) une seconde chambre (64), et au moins un second canal de purge (84) étant ménagé à travers la seconde bague (12) et comprenant au moins un orifice d'entrée (84a) débouchant dans la seconde chambre (64) et au moins un orifice de sortie (84b) débouchant sur une surface (18b) de la seconde bague qui est accessible depuis l'extérieur du palier à roulement.

6. Palier à roulement selon l'une quelconque des revendications précédentes, comprenant en outre au moins des premier et second éléments d'étanchéité (90, 92) successifs insérés axialement entre ladite seconde bague de roulement (18) et ladite seconde bague d'étanchéité (20) de la seconde bague, et au moins un canal de fuite (96) ménagé à travers ladite seconde bague de roulement (18), ou ladite seconde bague d'étanchéité (20), et comprenant au moins un orifice d'entrée (96a) débouchant sur une surface avant de ladite seconde bague de roulement, ou ladite seconde bague d'étanchéité, dans une zone située radialement entre les premier et second éléments d'étanchéité successifs et au moins un orifice de sortie (96b) débouchant sur une surface (18b) de ladite seconde bague de roulement, ou ladite seconde bague d'étanchéité, qui est accessible depuis l'extérieur du palier à roulement.

7. Palier à roulement selon l'une quelconque des revendications précédentes, comprenant en outre au moins un premier élément d'étanchéité (110) inséré axialement entre ladite première bague de roulement (14) et ladite première bague d'étanchéité (16) de la première bague et décalé radialement par rapport à la première bague d'étanchéité (54), et au moins un canal de fuite (118) ménagé à travers ladite première bague de roulement (14), ou ladite première bague d'étanchéité (16), et comprenant au moins un orifice d'entrée (118a) débouchant sur une surface avant de ladite première bague de roulement (14), ou ladite première bague d'étanchéité (16), dans une zone située radialement entre le premier élément d'étanchéité (110) et le premier joint d'étanchéité (54) et au moins un orifice de sortie (118d) débouchant sur une surface de ladite première bague de roulement, ou ladite première bague d'étanchéité, qui est accessible depuis l'extérieur du palier à roulement.

8. Palier à roulement selon la revendication 7, ladite première bague d'étanchéité (16) de la première bague étant formée comme une bague fendue et comprenant au moins une première bague partielle (40) et une seconde bague partielle (40) empilées axialement, les premier et deuxième joints d'étanchéité (54, 56) successifs étant respectivement supportés par les première et seconde bagues partielles (40, 42), le premier élément d'étanchéité (110) étant inséré axialement entre ladite première bague de roulement (14) et la première bague partielle (40) de ladite première bague d'étanchéité (16) de la première bague.

9. Palier à roulement selon la revendication 8, ledit canal de fuite (118) s'étendant axialement à travers les première et seconde bagues partielles (40, 42) de ladite première bague d'étanchéité (16).

10. Palier à roulement selon l'une quelconque des revendications précédentes, comprenant en outre, axialement de chaque côté desdites première et seconde bagues de roulement (14, 18) des première et seconde bagues, des joints d'étanchéité (34, 36) délimitant radialement entre lesdites première et seconde bagues de roulement un espace de roulement fermé à l'intérieur duquel est logée ladite rangée d'éléments de roulement (22), lesdits joints d'étanchéité (34, 36) étant distincts des premier et deuxième joints d'étanchéité (54, 56) successifs.
